# EUROPEAN PATENT APPLICATION

(11) **EP 4 769 658 A1**
(43) Date of publication of application: **01.07.2026**
(21) Application number: 25783074.5
(22) Date of filing: 26.03.2025
(51) Int. Cl.: H01M 10/6551, H01M 10/6556, H01M 10/613, H01M 10/658, H01M 50/276, H01M 50/233

(54) **BATTERY PACK HAVING IMPROVED COOLING PERFORMANCE**

(30) Priority: 04.04.2024 KR 20240045801
(71) Applicant: LG Energy Solution, Ltd., Seoul 07335 (KR)
(72) Inventor: LEE, Gi Hwan, Daejeon 34122 (KR); JUNG, Kitaek, Daejeon 34122 (KR)
(74) Representative: BCKIP Part mbB
(86) International application number: PCT/KR2025/095108
(87) International publication number: WO 2025/211898

(57) **Abstract**

A battery pack according to an exemplary embodiment of the present disclosure includes one or more battery modules, a housing configured to accommodate the battery modules and including a lid at an upper portion, and an upper heat sink arranged above the battery modules at an upper portion of the housing, wherein the upper heat sink is formed integrally with the lid. The battery pack according to an exemplary embodiment of the present disclosure has the effect of delaying heat transfer, controlling a temperature of a pack lid, and preventing structural collapse of an upper portion of the pack when excessive temperature increase or ignition occurs in a battery module within the battery pack.

## Description

### [Technical Field]

The present disclosure relates to a battery pack with improved cooling performance, and more specifically, to a battery pack in which cooling is performed not only at a lower portion of the battery pack but also at an upper portion thereof.

### [Background Art]

Secondary batteries refer to batteries that are chargeable and dischargeable, unlike primary batteries that are not chargeable, and are applied not only to portable devices but also to electric vehicles (EVs), hybrid electric vehicles (HEVs), and the like driven by electric drive sources.

Currently, widely used secondary batteries include lithium-ion batteries, lithium polymer batteries, nickel-cadmium batteries, nickel-hydrogen batteries, nickel-zinc batteries, and the like. An operating voltage of such a unit secondary battery cell, i.e., a unit battery cell, is about 2.5 V to 4.6 V. Therefore, when a higher output voltage is required, a plurality of battery cells are connected in series to configure a battery pack. In addition, a plurality of battery cells may be connected in parallel to configure a battery pack according to the charge/discharge capacity required for a battery pack. Accordingly, the number of battery cells included in the battery pack may be set variously according to the required output voltage or charge/discharge capacity.

When configuring a battery pack by connecting a plurality of battery cells in series or in parallel, in general, a battery module including at least one battery cell, preferably a plurality of battery cells, is first configured, and then a battery pack is configured by adding other components while using the at least one battery module. Here, the battery module refers to a component in which a plurality of battery cells are connected in series or in parallel, and the battery pack refers to a component in which a plurality of battery modules are connected in series or in parallel to increase a capacity, an output, and the like.

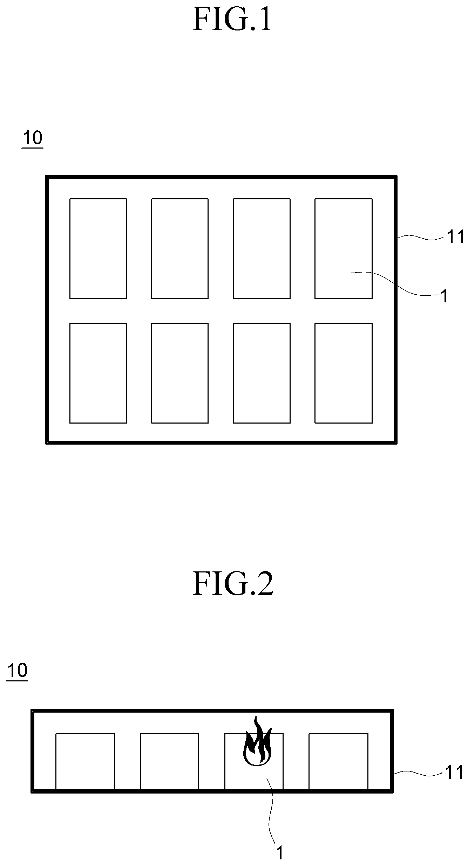

As shown in FIG. 1, typically, a battery pack 10 has a structure in which a plurality of battery modules 1 are accommodated within a pack housing 11. In order to maintain structural stability, the plurality of battery modules 1 or battery module assemblies may be generally arranged on the same plane.

However, in such a battery pack 10, when overcharging or the like occurs, the temperature of the battery module 1 may increase excessively, and an explosion or fire due to swelling may occur. Such an explosion or fire may pose a greater danger, potentially resulting in human injury.

Therefore, as shown in FIG. 2, when excessive temperature increase or ignition occurs in some of the battery modules 1 within the battery pack 10, it is necessary to delay thermal runaway and to control the maximum temperature of the case (particularly the lid) of the pack 10.

### [Disclosure]

### [Technical Problem]

The present disclosure has been made in an effort to provide a battery pack capable of delaying heat propagation, controlling a temperature of a pack lid, and preventing structural collapse of an upper portion of the pack when excessive temperature increase or ignition occurs in a battery module within the battery pack.

### [Technical Solution]

A battery pack according to an exemplary embodiment of the present disclosure includes one or more battery modules, a housing configured to accommodate the battery modules and including a lid at an upper portion, and an upper heat sink arranged above the battery modules at the upper portion of the housing, wherein the upper heat sink is formed integrally with the lid.

Additionally, the upper heat sink includes a cooling flow channel configured to allow a coolant to flow therethrough.

Additionally, the battery pack further includes a flame cover sheet arranged below the upper heat sink and above the battery modules.

Additionally, the flame cover sheet includes mica.

Additionally, the upper heat sink is arranged on a lower side of the lid.

Additionally, the upper heat sink is joined to the lid.

Additionally, the upper heat sink is brazed to the lid.

Additionally, the battery pack further includes a flame cover sheet arranged above the battery modules, and the flame cover sheet is arranged on a lower side of the upper heat sink.

Additionally, the flame cover sheet is coupled to a lower surface of the upper heat sink.

Additionally, the flame cover sheet is attached to the upper heat sink by an adhesive.

Additionally, the battery pack further includes a lower heat sink arranged at a lower portion of the housing.

Additionally, the lower heat sink includes a cooling flow channel configured to allow a coolant to flow therethrough.

### [Advantageous Effects of Invention]

A battery pack with improved cooling performance according to an exemplary embodiment of the present disclosure has the effects of delaying heat transfer, controlling a temperature of a pack lid, and preventing structural collapse of an upper portion of the pack when excessive temperature increase or ignition occurs in a battery module within the battery pack.

### [Description of Drawings]

FIG. 1 shows a battery pack of the related art.
FIG. 2 shows ignition in some battery modules shown in FIG. 1.
FIG. 3 shows a battery pack according to an exemplary embodiment of the present disclosure.
FIG. 4 is a perspective view of a battery module in an exemplary embodiment of the present disclosure.
FIG. 5 is an exploded perspective view of the battery module in an exemplary embodiment of the present disclosure.
FIG. 6 is a perspective view of a battery cell in an exemplary embodiment of the present disclosure.
FIG. 7 is a longitudinal sectional view of a battery pack according to an exemplary embodiment of the present disclosure.
FIG. 8 shows a flow channel of a heat sink in an exemplary embodiment of the present disclosure.
FIG. 9 schematically shows temperature increase and its suppression when ignition occurs in battery modules in an exemplary embodiment of the present disclosure.
FIG. 10 shows an upper heat sink joined to a pack lid in an exemplary embodiment of the present disclosure.

### [Mode for Carrying out Invention]

The advantages and features of the present disclosure, and a method for achieving the same will become apparent with reference to exemplary embodiments described in detail below together with the accompanying drawings. However, the present disclosure is not limited to the exemplary embodiments disclosed below, but can be implemented in a variety of different forms. The exemplary embodiments are provided to only complete the disclosure of the present disclosure and to allow one skilled in the art to completely understand the category of the present disclosure. The present disclosure is only defined by the category of the claims. Thus, in some exemplary embodiments, well-known process steps, well-known device structures, and well-known technologies have not been specifically described in order to avoid obscuring the interpretation of the present disclosure. Like reference numbers designate like elements throughout the specification.

In the drawings, the thicknesses of layers and regions are exaggerated for clarity. Like reference numerals have been assigned to like parts throughout the specification. When an element such as a layer, a film, a region, a plate, or the like is referred to as being "on" another element, it may be "directly on" another element or an intervening element may also be present. In contrast, when an element is referred to as being "directly on" another element, there are no intervening elements present. In addition, when an element such as a layer, a film, a region, a plate, or the like is referred to as being "below" another element, it may be "directly below" another element or an intervening element may also be present. Conversely, when an element is referred to as being "directly below" another element, there are no intervening elements present.

A battery pack 2000 with improved cooling performance according to the present disclosure will be described in detail with reference to the drawings.

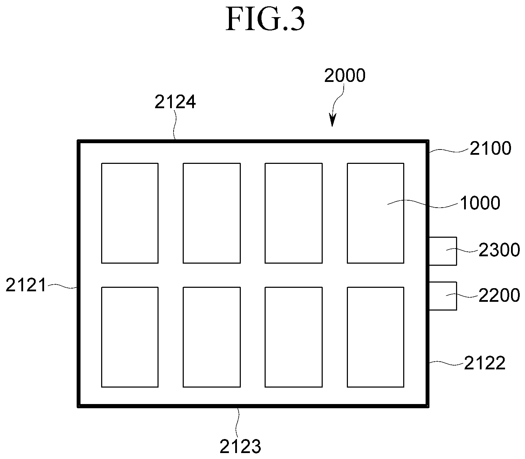

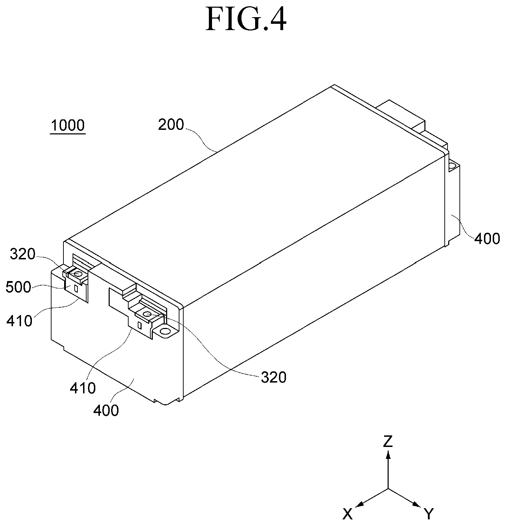

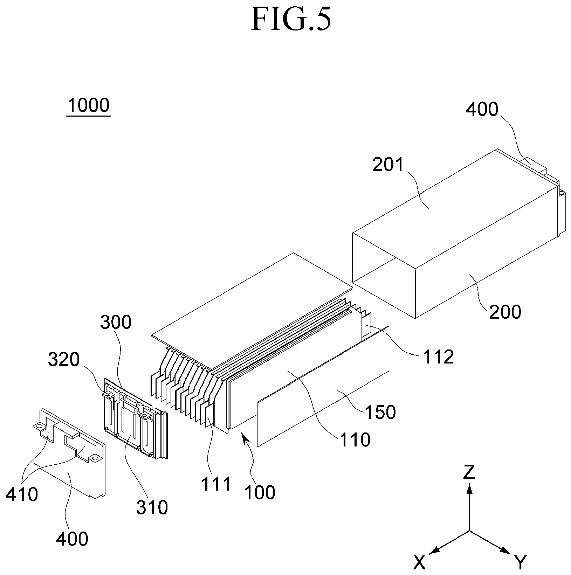

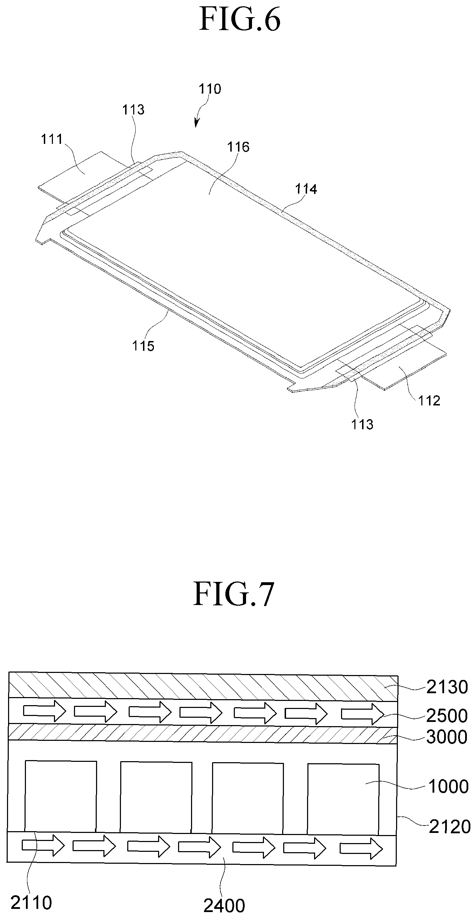

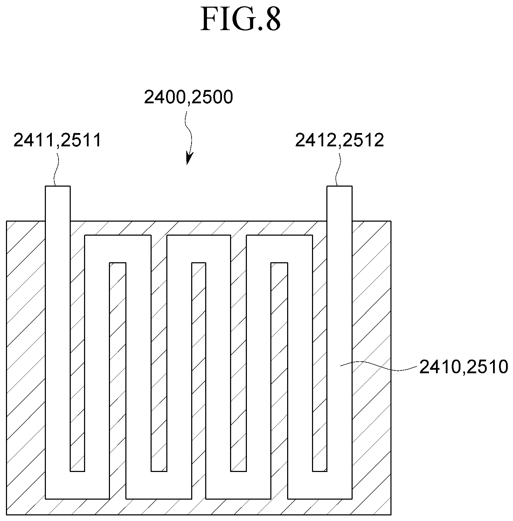

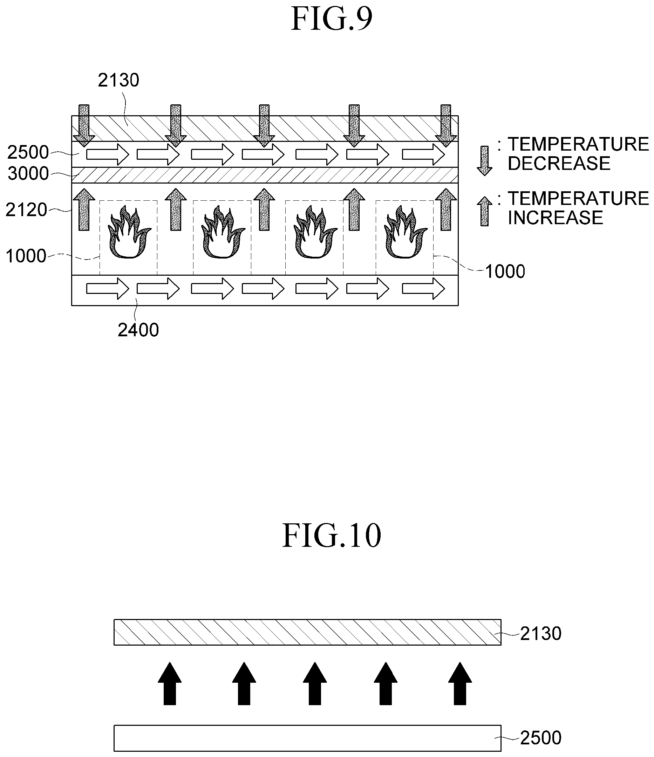

FIG. 3 shows a battery pack according to an exemplary embodiment of the present disclosure, FIG. 4 is a perspective view of a battery module in an exemplary embodiment of the present disclosure, FIG. 5 is an exploded perspective view of the battery module in an exemplary embodiment of the present disclosure, FIG. 6 is a perspective view of a battery cell in an exemplary embodiment of the present disclosure, FIG. 7 is a longitudinal sectional view of a battery pack according to an exemplary embodiment of the present disclosure, FIG. 8 shows a flow channel of a heat sink in an exemplary embodiment of the present disclosure, FIG. 9 schematically shows temperature increase and its suppression when ignition occurs in battery modules in an exemplary embodiment of the present disclosure, and FIG. 10 shows an upper heat sink joined to a pack lid in an exemplary embodiment of the present disclosure.

The battery pack 2000 with improved cooling performance according to an exemplary embodiment of the present disclosure may include one or more battery modules 1000 and a housing 2100 that accommodates the battery modules 1000.

The housing 2100 can accommodate a plurality of battery modules 1000, and may include a bottom portion 2110, a side portion 2120, and a lid 2130, as shown in FIGS. 3 and 7.

The bottom portion 2110 of the housing 2100 may form a bottom of the housing 2100 in the form of a plate extending horizontally.

The side portion 2120 of the housing 2100 forms side surfaces of the housing 2100, and may include a left side portion 2121 forming a left side surface of the housing 2100, a right side portion 2122 forming a right side surface of the housing 2100, a front surface portion 2123 forming a front surface of the housing 2100, and a rear surface portion 2124 forming a rear surface of the housing 2100.

Accordingly, the left side portion 2121 and the right side portion 2122 of the side portion 2120 may be arranged at left and right edges of the bottom portion 2110, respectively, and the front surface portion 2123 and the rear surface portion 2124 may be arranged at front and rear edges of the bottom portion 2110, respectively.

In the present exemplary embodiment, the housing 2100 is shown as having a rectangular box shape, but is not limited thereto and may take various other shapes, including polygonal shapes.

The lid 2130 may be a horizontally extending plate arranged at an upper portion of the housing 2100, and may cover an internal space of the housing 2100 defined by the bottom portion 2110 and the side portion 2120. The lid 2130 may be connected to an upper end of the side portion 2120, and specifically, edges of the lid 2130 may be coupled to upper ends of the left side portion 2121, the right side portion 2122, the front surface portion 2123, and the rear surface portion 2124 constituting the side portion 2120 by means such as bolts, welding, or the like.

Although not shown, partitions (not shown) may be arranged on the bottom portion 2110 between the respective battery modules 1000.

As shown in FIGS. 4 to 6, the battery module 1000 may include a battery cell stack 100 in which a plurality of battery cells 110 are stacked in one direction, a module case 200 that accommodates the battery cell stack 100, busbar frames 300 positioned on a front and/or rear side of the battery cell stack 100, end plates 400 covering the front and/or rear side of the battery cell stack 100, and busbars 310 and 320 mounted on the busbar frames 300.

The battery cell stack 100 may be composed of the plurality of battery cells 110 stacked in one direction, and the plurality of battery cells 110 may be electrically connected. The direction in which the plurality of battery cells 110 are stacked may correspond to the Y-axis direction (or -Y-axis direction) in FIG. 5.

A direction from the front side toward the rear side of the battery cell stack 100, or the opposite direction, may be defined as a longitudinal direction of the battery cell stack 100, and may correspond to the X-axis direction in the drawing. In addition, a direction from the upper surface toward the lower surface of the battery cell stack 100, or the opposite direction, may be defined as a width direction of the battery cell stack 100, and may be the Z-axis direction in the drawing.

The longitudinal direction of the battery cell stack 100 may be substantially the same as the longitudinal direction of the battery cell 110. Electrode leads 111 and 112 of battery cells 110 may be positioned on the front and rear sides of the battery cell stack 100, and the busbars 310 and 320 of the battery module 1000 may be arranged close to the front and rear sides of the battery cell stack 100 so as to facilitate electrical connection with the electrode leads 111 and 112.

The battery cell 110 may be provided as a pouch-type battery cell, and the pouch-type battery cell may maximize the number of cells that are stacked per unit area. However, the battery cell 110 is not necessarily required to be provided as a pouch-type battery cell, and may instead be provided in prismatic, cylindrical, or various other forms.

The battery cell 110 provided in the form of a pouch-type battery cell may include an electrode assembly and a cell case 115 that accommodates the electrode assembly (see FIG. 6).

The cell case 115 of the battery cell 110 serves to accommodate the electrode assembly, and may be a pouch-type cell case 115. The cell case 115 may include a lower case and an upper case that covers the lower case, and the upper and lower cases may be formed integrally. In addition, as shown in FIG. 6, a connecting portion between the upper and lower cases may be formed into a structure in which it is bent and folded. As shown, the upper case may completely cover the lower case and a sealing portion 114 may be formed at the periphery.

Each of the upper and lower cases may be composed of a laminate structure including an inner covering layer, a metal layer, and an outer covering layer. The inner covering layer is positioned on an inner side of the cell case 115 with respect to the metal layer, and is required to have insulating properties and resistance to an electrolyte because it comes into direct contact with the electrode assembly. Additionally, for sealing with the outside, sealability is required, i.e., a sealed portion formed by thermal bonding between the inner covering layers is required to exhibit excellent heat bonding strength. The metal layer is positioned between the inner and outer covering layers and acts as a barrier layer to prevent moisture or various gases from penetrating into the battery from the outside. A preferable material for the metal layer in contact with the inner covering layer may be an aluminum (Al) thin film that is lightweight and has excellent formability. The outer covering layer is positioned on an outer side of the cell case 115 with respect to the metal layer. For the outer covering layer, a heat-resistant polymer having excellent tensile strength, moisture impermeability, and air impermeability may be used in order to secure heat resistance and chemical resistance while protecting the electrode assembly. For example, nylon or polyethylene terephthalate may be used.

Each of the upper and lower cases may be formed with an accommodation groove 116, and an electrode assembly may be accommodated in the accommodation grooves 116 of the upper and lower cases.

The electrode assembly that is accommodated in the cell case 115 may be one selected from a group consisting of a jelly-roll type electrode assembly having a structure in which a separator is interposed between long sheet-like positive and negative electrodes and the resulting laminate is then wound, a stack-type electrode assembly including unit cells having a structure in which rectangular positive and negative electrodes are stacked with a separator interposed therebetween, a stack-and-folding type electrode assembly in which unit cells are wound using a long separator film, and a lamination-and-stack type electrode assembly in which unit cells are stacked with a separator interposed therebetween and attached to each other.

In addition, the electrode assembly may include two electrode tabs, and two electrode leads 111 and 112 respectively connected to the electrode tabs by welding.

One lead 111 or 112 of the two electrode leads 111 and 112 may be a positive electrode lead connected to a positive electrode tab, and the other electrode lead 111 or 112 may be a negative electrode lead connected to a negative electrode tab.

A lead film 113 may be attached to each of the electrode leads 111 and 112. The lead films 113 coupled to the electrode leads 111 and 112 are positioned between the electrode leads 111 and 112 and the cell case 115 to prevent a short circuit between the electrode leads 111 and 112 and the cell case 115 and to improve sealing strength, thereby preventing leakage of the electrolyte or the like.

The two electrode leads 111 and 112 are shown as being arranged on both sides of the electrode assembly, respectively, but may instead be arranged on only one side of the electrode assembly, depending on the arrangement of the electrode tabs.

The module case 200 may serve to protect the battery cell stack 100 and electrical components connected to the battery cell stack from external physical impacts, and may accommodate the battery cell stack 100 and the electrical components in an internal space of the module case 200.

A structure of the module case 200 may vary, and may be, for example, a monoframe structure. Here, the monoframe may refer to a form of a metal plate with an upper surface, a lower surface, and both side surfaces formed integrally. The monoframe may be manufactured by extrusion molding. As another example, the module case 200 may have a structure in which a U-shaped frame and an upper plate (upper surface 201) are combined. In the case of a structure in which a U-shaped frame and an upper plate are combined, the structure of the module case 200 may be formed by combining an upper plate with an upper side of a U-shaped frame, which is a metal plate in which a lower surface and both side surfaces are combined or integrally formed, and each frame or plate may be manufactured by press forming. In addition, the structure of the module case 200 may be provided in the form of an L-shaped frame, in addition to the monoframe or U-shaped frame, and may also be provided in various other forms not described in the foregoing example.

The structure of the module case 200 may be provided in an open form along the longitudinal direction of the battery cell stack 100. The front and rear sides of the battery cell stack 100 may not be covered by the module case 200. The electrode leads 111 and 112 of the battery cells 110 may not be covered by the module case 200. The front and rear sides of the battery cell stack 100 may be covered by the busbar frames 300, end plates 400, busbars 310 and 320, or the like described below. With this arrangement, the front and rear sides of the battery cell stack 100 can be protected from external physical impacts and the like.

A compression pad 150 may be positioned between the battery cell stack 100 and one inner surface of the module case 200.

The compression pad 150 may be arranged to face the outermost battery cell 110 of the battery cell stack 100 in the Y-axis direction in the drawing.

In addition, although not shown, a thermally conductive resin may be injected between the battery cell stack 100 and an inner surface of the module case 200, and a thermally conductive resin layer (not shown) may be formed between the battery cell stack 100 and one inner surface of the module case 200 by the injected thermally conductive resin. In this case, the thermally conductive resin layer may be positioned on the Z-axis of the battery cell stack 100, and may be formed between the battery cell stack 100 and a bottom surface of the module case 200 positioned on the -Z-axis.

The busbar frame 300 is positioned on one side of the battery cell stack 100, and may cover one side of the battery cell stack 100 while simultaneously guiding connection between the battery cell stack 100 and an external device. Specifically, the busbar frame 300 may be positioned on the front or rear side of the battery cell stack 100, as shown. At least one of the busbars 310 and 320 and a module connector may be mounted on the busbar frame 300. As shown in FIG. 5, one surface of the busbar frame 300 may be connected to the front or rear side of the battery cell stack 100, and the other surface of the busbar frame 300 may be connected to the busbars 310 and 320.

The busbar frame 300 may include an electrically insulating material. The busbar frame 300 may restrict the busbars 310 and 320 from coming into contact with portions of the battery cells 110 other than portions where they are joined to the electrode leads 111 and 112, and may prevent an electrical short circuit.

The busbar frame 300 may be positioned on each of the front and rear sides of the battery cell stack 100.

The busbars 310 and 320 may be mounted on one surface of the busbar frame 300, and may serve to electrically connect the battery cell stack 100 or the battery cells 110 to an external device circuit. The busbars 310 and 320 may be protected from external impacts and the like by being positioned between the battery cell stack 100 or the busbar frame 300 and the end plate 400, and the deterioration in durability due to external moisture and the like may be minimized.

The busbars 310 and 320 may be electrically connected to the battery cell stack 100 via the electrode leads 111 and 112 of the battery cells 110.

Specifically, the electrode leads 111 and 112 of the battery cells 110 may be bent and connected to the busbars 310 and 320 after passing through slits formed in the busbar frame 300. The battery cells 110 constituting the battery cell stack 100 may be connected in series or in parallel by the busbars 310 and 320.

The busbars 310 and 320 may include a terminal busbar 320 for electrically connecting one battery module 1000 to another battery module 1000. At least a portion of the terminal busbar 320 may be exposed to the outside of the end plate 400 to be connected to another battery module 100, and the end plate 400 may be provided with a terminal opening 410 for this purpose.

The terminal busbar 320 may further include a protrusion protruding upward, unlike the other busbar 310, and the protrusion may be exposed to the outside of the battery module 1000 through the terminal opening 410. The terminal busbar 320 may be connected to another battery module 1000 or a battery disconnect unit (BDU) by the protrusion exposed through the terminal opening 410, and may form a high voltage (HV) connection with another battery module 1000 or BDU.

The end plate 400 may serve to protect the battery cell stack 100 and electrical components connected to the battery cell stack from external physical impacts by covering an open surface of the module case 200. To this end, the end plate 400 may be made of a material having a predetermined strength, and may include, for example, metal such as aluminum.

The end plate 400 may be coupled with the module case 200 while covering the busbar frame 300 or busbars 310 and 320 located on one side of the battery cell stack 100. Each corner of the end plate 400 may be coupled to a corresponding corner of the module case 200 by welding or the like.

In addition, an insulating cover 500 for electrical insulation may be arranged between the end plate 400 and the busbar frame 300. The insulating cover 500 may include an electrical insulating material and may block the busbars 310 and 320 from coming into contact with the end plate 400. The insulating cover 500 may be positioned on an inner surface of the end plate 400, and may be in close contact with the inner surface of the end plate 400. However, no such limitation is intended. The end plates 400 may be positioned on one side and the other side of the module case 200 to cover both sides of the battery cell stack 100, respectively.

In addition, the battery pack 2000 according to the present disclosure may further include a coolant inlet 2200, a coolant outlet 2300, a lower heat sink 2400, an upper heat sink 2500, and a flame cover sheet 3000.

The coolant inlet 2200 is intended to allow a coolant to flow into the battery pack 2000 from the outside, and the coolant flows into the battery pack 2000 from the outside through the coolant inlet 2200. The coolant introduced through the coolant inlet 2200 may flow into the upper heat sink 2500 and the lower heat sink 2400. As shown in FIG. 3, the coolant inlet 2200 may be arranged on one side of the side portion 2120 of the housing 2100, but its location may be changed. The coolant may be, for example, cooling water.

The coolant outlet 2300 is intended to allow the coolant to flow out from the battery pack 2000, and the coolant flows out from the battery pack 2000 to the outside through the coolant outlet 2300. The coolant discharged from the upper heat sink 2500 and the lower heat sink 2400 may move to the coolant outlet 2300.

The lower heat sink 2400 may be arranged at a lower portion of the battery pack 2000 as shown in FIG. 7 to cool the lower portion of the battery pack 2000. Specifically, the lower heat sink 2400 may be arranged on a lower side of the bottom portion 2110 of the battery pack 2000 and may be coupled to the bottom portion 2110. The lower heat sink 2400 may include a cooling flow channel 2410 through which the coolant introduced through an inlet 2411 moves. Thus, while the coolant moves through the cooling flow channel 2410, the lower portion of the battery pack 2000 is cooled, and the coolant may be discharged through an outlet 2412 formed at one end of the cooling flow channel 2410.

The upper heat sink 2500 may be arranged at an upper portion of the battery pack 2000 to cool the upper portion of the battery pack 2000. Specifically, the upper heat sink 2500 may be arranged on an upper or lower side of the lid 2130 of the battery pack 2000 and may be integrally coupled to the lid 2130. In the drawing of the present exemplary embodiment, an example is shown in which the upper heat sink 2500 is arranged on the lower side of the lid 2130, but may be formed integrally with the lid 2130. The upper heat sink 2500 may be joined to the lid 2130 by brazing, welding, or the like. Accordingly, the lid 2130 of the present exemplary embodiment may be joined to the upper heat sink 2500 to form an integrated cooling lid.

The upper heat sink 2500 may include a cooling flow channel 2510 through which the coolant moves. The coolant may be introduced through an inlet 2511 formed at one end of the cooling flow channel 2510, and as the coolant moves through the cooling flow channel 2510, the coolant may cool the upper portion of the battery pack 2000 (or the lid 2130). The coolant may be discharged through an outlet 2512 formed at the other end of the cooling flow channel 2510. Therefore, the upper heat sink 2500 may control a temperature of the lid 2130.

FIG. 8 shows an example of the cooling flow channel 2510, 2410 of the upper heat sink 2500 (or the lower heat sink 2400).

The cooling flow channel 2510 or 2410 of the upper heat sink 2500 (or the lower heat sink 2400) may be formed in a zigzag shape as shown, and the inlet 2511 or 2411 through which the coolant is introduced may be arranged at one end of the cooling flow channel 2510 or 2410, and the outlet 2512 or 2412 through which the coolant is discharged may be arranged at the other end of the cooling flow channel 2510 or 2410.

The flame cover sheet 3000 may protect the lid 2130 and the upper heat sink 2500 from flames caused by ignition of the battery module 1000 at the upper portion of the housing 2100. Specifically, in the present exemplary embodiment, the flame cover sheet 3000 may be coupled to a lower portion of the upper heat sink 2500, and may be coupled in contact with a lower surface of the upper heat sink 2500. For example, the flame cover sheet 3000 may be attached to the lower surface of the upper heat sink 2500 by an adhesive (for example, a structural adhesive). An adhesive may be applied to one surface of the flame cover sheet 3000, and an adhesive layer may be formed on one surface of the flame cover sheet 3000.

The flame cover sheet 3000 may be made of mica or FRB (available from 3M), or other refractory materials, or may include mica and other refractory materials.

In the present exemplary embodiment, the flame cover sheet 3000 is arranged below the lid 2130 or the upper heat sink 2500 in this way. Accordingly, when flames occur due to ignition of the battery module 1000 located below the flame cover sheet 3000, the lid 2130 and the upper heat sink 2500 can be protected from the flames, and collapse of an upper structure of the battery pack 2000 can be prevented.

According to an exemplary embodiment of the present disclosure, the battery pack 2000 includes the upper and lower heat sinks 2500 and 2400 that cool the upper and lower portions of the battery pack 2000, respectively. As shown in FIG. 9, when thermal runaway (or thermal propagation) (unpredicted explosion or ejection of gas or flames caused by abnormal behavior within a battery cell) occurs due to ignition of the battery module 1000 in the pack 2000 or the like, the flame cover sheet 3000 protects the lid 2130 and the upper heat sink 2500 from the flames, and the temperature increase of the lid 2130 caused by the flames and gas can be controlled by the upper heat sink 2500. In addition, the temperature of the lid 2130 is controlled by the upper heat sink 2500 in the battery pack 2000, and internal air cooling is performed, thereby delaying heat transfer and preventing collapse of the upper structure (the lid 2130 and the upper heat sink 2500) of the battery pack 2000.

FIG. 10 shows an example in which the upper heat sink 2500 is joined to and integrated with the lid 2130.

Specifically, the upper heat sink 2500 may be joined to the lid 2130 by brazing on the lower side of the lid 2130. As another example, the upper heat sink 2500 may be joined to the upper side of the lid 2130.

Note that in the battery pack 2000 according to an exemplary embodiment of the present disclosure, a plurality of battery cells 110 may be directly arranged. That is, the battery cell stack 100 in which the plurality of battery cells 110 are stacked may be arranged directly in the housing 2100 without the module case 200.

The battery pack according to the present disclosure may additionally include various control and protection systems, such as a battery management system (BMS).

The battery module 1000 and the battery pack 2000 according to the present disclosure may be applied to various devices. Specifically, they may be applied to transportation means such as electric bicycles, electric vehicles, and hybrid vehicles, or energy storage systems (ESS), but are not limited thereto and may be applied to various other devices that use secondary batteries.

Although the present disclosure has been described with reference to preferred exemplary embodiments as described above, it is not limited to the above-described exemplary embodiments, and various changes and modifications can be made by one skilled in the art without departing from the spirit of the present disclosure.

### [Industrial Applicability]

The present disclosure can provide a battery pack capable of delaying heat transfer, controlling a temperature of a pack lid, and preventing structural collapse of an upper portion of the pack when excessive temperature increase or ignition occurs in a battery module within the battery pack.

## Claims

1. A battery pack comprising:
one or more battery modules;
a housing configured to accommodate the battery modules and comprising a lid at an upper portion; and
an upper heat sink arranged above the battery modules at the upper portion of the housing,
wherein the upper heat sink is formed integrally with the lid.

2. The battery pack of claim 1, wherein the upper heat sink comprises a cooling flow channel configured to allow a coolant to flow therethrough.

3. The battery pack of claim 1, further comprising a flame cover sheet arranged below the upper heat sink and above the battery modules.

4. The battery pack of claim 3, wherein the flame cover sheet comprises mica.

5. The battery pack of claim 1, wherein the upper heat sink is arranged on a lower side of the lid.

6. The battery pack of claim 1, wherein the upper heat sink is joined to the lid.

7. The battery pack of claim 1, wherein the upper heat sink is brazed to the lid.

8. The battery pack of claim 1, further comprising a flame cover sheet arranged above the battery modules,
wherein the flame cover sheet is arranged on a lower side of the upper heat sink.

9. The battery pack of claim 8, wherein the flame cover sheet is coupled to a lower surface of the upper heat sink.

10. The battery pack of claim 9, wherein the flame cover sheet is attached to the upper heat sink by an adhesive.

11. The battery pack of claim 1, further comprising a lower heat sink arranged at a lower portion of the housing.

12. The battery pack of claim 11, wherein the lower heat sink comprises a cooling flow channel configured to allow a coolant to flow therethrough.
